# EUROPEAN PATENT APPLICATION

(11) **EP 3 306 795 A1**
(43) Date of publication of application: **11.04.2018**
(21) Application number: 17194172.7
(22) Date of filing: 29.09.2017
(51) Int. Cl.: H02K 27/06, H02K 29/03, H02K 1/27, H02K 1/28

(54) **ROTOR FOR A BRUSHLESS MOTOR**

(30) Priority: 30.09.2016 BR 102016022810; 25.09.2017 BR 102017020416
(71) Applicant: Huangshi Dongbei Electrical Appliance Co., Ltd., Huangshi, Hubei 435000 (CN)
(72) Inventor: HADDAD KALLUF, Flavio Jorge, 89203-074 JOINVILLE, SANTA CATARINA (BR); CARRARA COUTO, Paulo Rogério, 89217-440 JOINVILLE, SANTA CATARINA (BR)
(74) Representative: Intès, Didier Gérard André

(57) **Abstract**

The present invention relates to a rotor (2) for brushless type motor with surface magnets (1), having radial stoppers (7) for limiting the angular displacement of the magnets during the assembly of the rotor, and having further axial stoppers (12) to limit the axial displacement of the magnets (1) during the assembly. The stoppers (7, 12) ensure the correct positioning of the magnets without the need for addition of other components, and also guarantee good performance, further avoiding problems related to noise or vibration.

## Description

### TECHNICAL FIELD

The present invention relates to a rotor for brushless type motors, used in variable-capacity hermetic compressors, for refrigeration, having features that allows a correct positioning of the magnets used therein.

### DESCRIPTION OF THE STATE OF THE ART

Variable-capacity hermetic compressors normally use a mechanical connecting rod-and-piston type system, which are connected to the shaft by an eccentric pin. To move such mechanism brushless type motors are normally used, which are usually composed of a stator and a rotor, the latter being composed of a laminated electric steel core and surface magnets (although it is also possible to find rotor versions with magnets inserted internally). The stator is usually secured to the block by screws, and also secured to the suspension springs. On the other hand, the rotor is secured to the eccentric shaft by means of mechanical interference during the assembly process.

A specific feature of brushless type motors, employing rotors with surface magnets, is the fact that the magnets must be equally spaced in relation to one another in the radial direction. A typical construction of this type of configuration is the rotor assembly with usually four or six ring segments of ferrite magnets being that each segment has an angle of 80 degrees from end to end. In this case, the space between magnets will be of 20 degrees, which is sufficient to ensure a good operation of the motor.

Another feature of this type of rotor is the fact that the magnets must be axially aligned, so that the magnetic flux generated by the magnets can be transmitted to the rotor with the minimum possible losses.

The major difficulties related to the mass production of this type of rotor arise from the fact that the magnet segments are usually attached to the electric steel core by means of gluing and, for this reason, can undergo displacements, both radial and axial, during curing of the glue (usually carried out in ovens).

The radial displacement of the magnets can cause the space between two adjacent segments to be very small on one side and, hence, very large on the opposite side of the same magnet. This displacement can lead to significant distortions in the induced voltage waveform, also called electromotive force (EMF). This distortion generates high frequency harmonic components which, in addition to not contributing to torque generation, can cause problems related to motor speed control and/or vibration and noise problems.

Another negative effect of the unequal spacing of the magnets in the radial direction is the loss of flux, occurring at the ends of each segment. There are two negative consequences related to such fact: the first is the decrease in useful magnetic flux, which reduces torques and efficiency. The second is the formation of magnetic saturation zones in the stator, which can also reduce electrical efficiency.

The axial displacement of the magnets can also bring undesirable effects to the performance of the motor. Importantly, axial displacement refers to the misalignment of the magnets with each other and/or the misalignment of the center of each magnet and the center of the rotor lamination stack. This displacement generates axial forces that can overload the bearings, reduce efficiency of the motor or generate vibration and noise.

Techniques that assist in the positioning of magnets during mass production of rotors for brushless type motors are already known, such as in document WO 93/07672, wherein the positioning of the magnets is assisted by means of surface bevels. This method, however, only partially guarantees the radial positioning, besides not guaranteeing the axial position.

Another technique shown in document EP 1349261A2 uses magnets partially buried in the rotor core (internal magnets). This configuration allows a perfect radial positioning, but it makes the process difficult, since the magnets must have great precision of manufacture so that they fit perfectly in the housings. This technique also does not guarantee axial positioning.

Also, another technique used to solve the problem of radial positioning of the magnets is shown in document US 2002/0135253 A1, which proposes to use parts of the rotor lamination stack itself as limiters for radial positioning. Again, this would require great precision in the manufacture of the magnets, and also causes some of the magnetic flux generated by the magnets, which should pass through the air gap of the motor, to be lost due to the return flow through these limiters. The axial position of the magnets is also not guaranteed by such technique.

The present invention aims to solve these and other drawbacks, as will be better described below.

### GOALS OF THE INVENTION

It is a goal of the invention to make the magnets of a rotor to be perfectly axially aligned.

It is a goal of the invention to allow the magnetic flux generated by the rotor to be transmitted to the stator in the most optimized manner possible.

It is another goal of the invention to prevent radial displacement of the magnets of the rotor.

It is another goal of the invention to prevent the space between two adjacent magnet segments to be too small on one side and, therefore, too large on the opposite side of the same magnet.

It is another goal of the invention to avoid significant distortions in the induced voltage waveform.

It is also a further goal of the invention to prevent the appearance of axial forces, which may overload the bearings and reduce efficiency of the motor or generate vibration and noise.

### SUMMARY OF THE INVENTION

The present invention relates to a rotor for a brushless motor, configured for the correct radial and axial positioning of magnets, during the assembly thereof. In order to obtain a correct radial positioning, a radial extension is used in the lamination stack of the rotor, in order to create a stopper that limits the radial displacement of the magnets. To prevent the magnets from being positioned in a misaligned manner in the axial direction, this is achieved by a protrusion created in the lower and upper caps, limiting the positioning field of the magnet during the assembly, avoiding said axial misalignment.

Thus, the present invention relates to a rotor for brushless type motor with surface magnets having at least one protrusion/stopper disposed radially in its steel core and adjacently located between one of the axial ends of at least each two of four magnet segments equidistant from each other in said rotor. Indeed, in a preferred embodiment, at least one protrusion is located between all of the axial ends of all the magnet segments, equidistant from each other in said rotor.

The rotor has caps on the lower and upper side, being that the caps has at least one axial recess projecting towards the region of the radial ends of the magnets. The number of recesses must be equal to the number of magnet segments of the rotor.

The stopper size (L-width) must be between 1/2 and 2/3 of the average space between all magnets disposed in the rotor and the stopper can have a height (H) of less than 50% of the thickness of the magnet.

Preferably, the stopper can have a length (D) extending over the entire axial length of the surface of the rotor. However, the stopper can also extend in part of the axial length (D) of the surface of the rotor.

The rotor may further comprise at least two stopper elements, of minimum axial length (D) and of size (L-width) between 1/2 and 2/3 of the average space between all magnets, each preferably disposed near the ends of the rotor.

In another embodiment, the rotor comprises only one stopper, between each end of the magnets, whose length (D) is less than the total of its surface in the axial direction.

In an additional embodiment, the stopper between each end of the magnets has a length (D) of 1/3 to 2/3 of the total of its surface in the axial direction.

The axial recess has a radial length (C) sufficient to keep the magnets (1) properly fit in the correct place and its width (W) must be at least a size slightly larger than the space between the magnets. The axial recess should have a radial length (C) between 1/3 and 1/1 of the thickness of the magnet and should have the width (W) size ranging from 11/10 of the space between the magnets to the entire perimeter of the cap.

The axial recess has a depth (P) capable of allowing a gap between its inner surface and the side surface of the magnets (1) facing it, such gap may be from 1 mm to 5 mm in size, depending on the size of the rotor to be used.

The radial stoppers of the rotor can be formed during the stamping of the electric steel lamination or by additional components fixed to the rotor during manufacturing. The caps may be made of metallic material or polymeric material.

### BRIEF DESCRIPTION OF THE DRAWINGS

After the brief description, the invention will now be described in more details with the aid of examples presented in the form of Figures.
Figure 1 - A cross-sectional view of part of an electric motor of the prior art and a graphic illustrating the EMF corresponding to the alignment of the magnets of said motor.
Figure 2 - A cross-sectional view of part of an electric motor of the prior art, similar to the one of Figure 1, however, with the magnets radially displaced and a graphic illustrating the EMF corresponding to the incorrect alignment of the magnets of said motor.
Figure 3 - A magnetic flux map of the configuration shown in Figure 1.
Figure 4 - A magnetic flux map of the configuration shown in Figure 2.
Figure 5 - A radial-sectional view of a rotor with a magnet displacement limiting stopper.
Figure 6 - A perspective view and a front plan view showing a rotor with an axial displacement of one of the magnets.
Figure 7 - A perspective view illustrating the preferred embodiment of the rotor of the present invention.

### DETAILED DESCRIPTION OF THE DRAWINGS

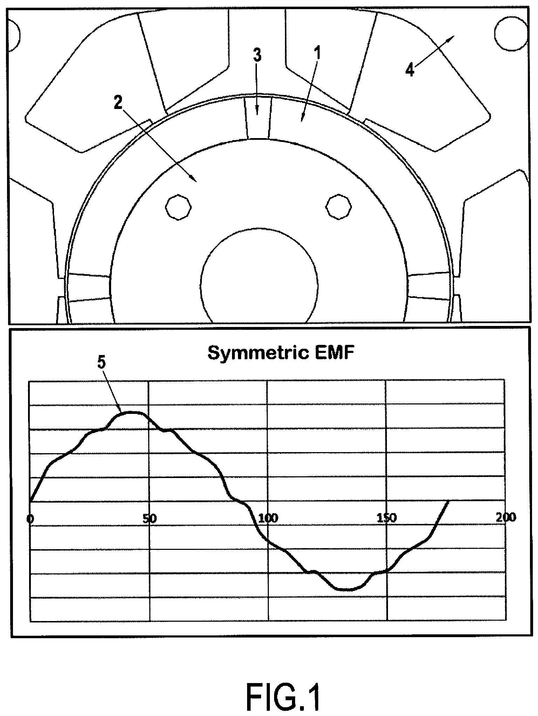

Figure 1 illustrates a cross-section of part of the electric motor consisting of a laminated stator (4), a rotor with laminated core (2) and ring segment magnets (1) disposed along the surface of the rotor (2). It is possible to note in such figure that the gap (3) between adjacent magnets is suitable so that there is no loss of motor performance. In the same figure, it is possible to notice that graphic that illustrates in a line (5) the EMF (Electromotive force) which, as can be seen from the above graphic, is perfectly symmetrical, which is the ideal configuration for the proper functioning of the motor.

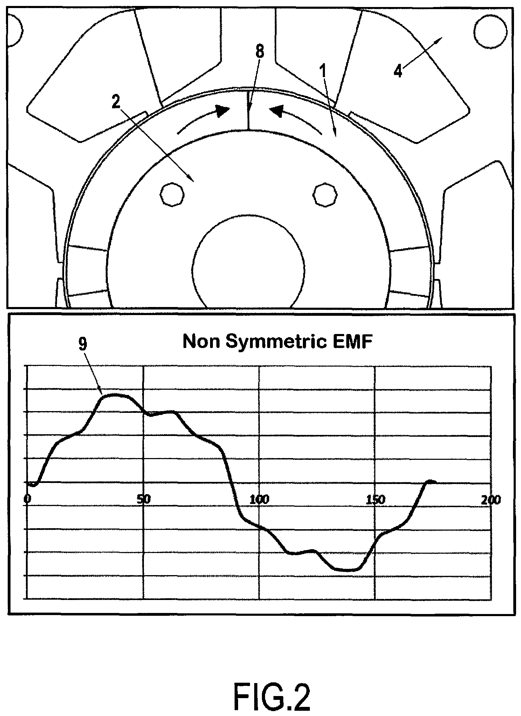

In figure 2, the same cross-section is illustrated, similar to that of figure 1, however, with the magnets (1) being incorrectly displaced in the radial direction, in order to generate an angular asymmetry and, consequently, a very small gap (8) in one of the adjacent magnets. In the same figure, it is possible to verify that the waveform of the EMF illustrated by a line (9) illustrated in the graphic is quite asymmetric, generating potential problems of performance, noise and vibration, besides hindering the speed control of the motor.

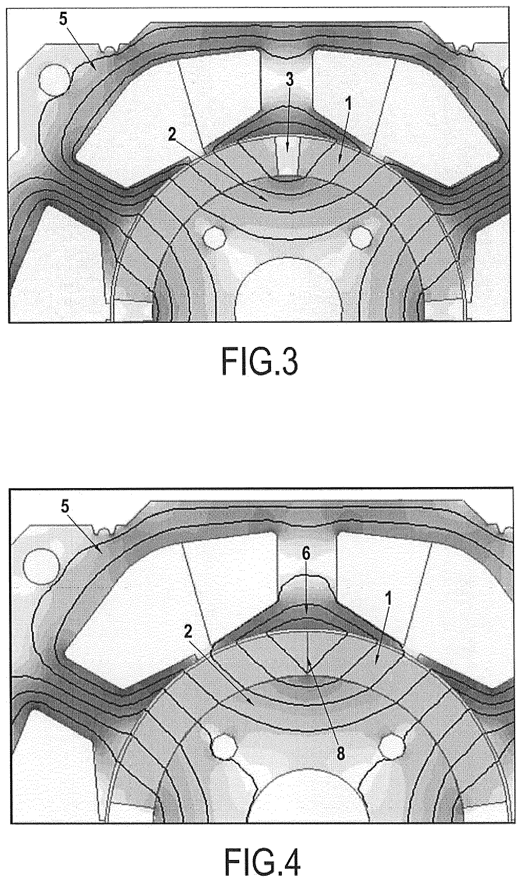

The magnetic flux map of the configuration illustrated in figure 1 can be seen in figure 3, wherein the darker tones represent higher flux densities. For the configuration in which the magnets (1) are correctly positioned, the space between the magnets (3) should be substantially equal between them and sufficient to maintain the symmetry of the EMF (5). In this figure, it is illustrated a flow loss of approximately 30% with respect to the total flow generated by the magnets. The lower this value, the better the motor performance.

In figure 4, the magnetic flux map of the configuration illustrated in figure 2 can be seen. Again, the darker tones represent higher flux densities. For the configuration in which the magnets (1) are incorrectly positioned, the space between the magnets (6) is very small, generating localized saturations and loss of part of the flux generated by the magnets, which generates a significant asymmetry of the EMF (9). In this figure, it is illustrated a loss of flux of approximately 50%, which significantly reduces motor performance.

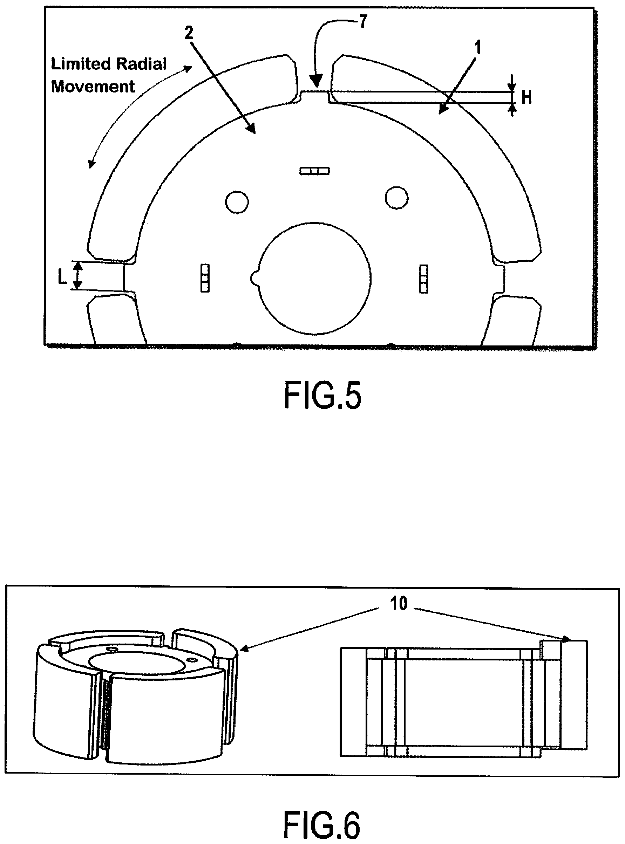

In figure 5, it can be seen a stopper (7) of the present invention, which is originated as an extension of the surface of the rotor and serves to limit the angular displacement of the magnets (1). It can be seen that the radial movement is limited by the stopper (7). The size (L-width) of this stopper should be between 1/2 and 2/3 of the average space between all the magnets to enable the EMF to be symmetrical, which will guarantee the gap so that the magnets (1) can be assembled, considering the tolerance of its dimensions. The height (H) of the stopper also influences the symmetry of the EMF, and a height greater than 50% of the thickness of the magnet should not be used, so that there is no significant loss of flow. In a preferred embodiment, the length (D) of the stopper (7) extends over the entire axial length of the surface of the rotor (2). The radial stoppers/extensions (7) of the rotor may be formed during the stamping of the electric steel lamination. Said radial extensions (7) of the rotor may be formed by additional components fixed to the rotor during manufacture. Said component being of the same material as the rotor (2).

In an alternate embodiment, it is not necessary for the stopper (7) to extend over the entire axial length (D) of the surface of the rotor (2), but has a length (D) that is capable of providing stability to the magnet assembly, and of limiting their angular displacement. In fact, in this additional embodiment, at least two stopper (7) elements, of minimum axial length (D) (for example, 2 mm) and of size (L-width) between 1/2 and 2/3 of the average space between all the magnets (1), each preferably disposed near the ends of the rotor to allow the correct positioning of the magnets and that the EMF is symmetrical. In addition, the use of these at least two elements, rather than a single stopper of the same length as the axial size of the rotor (2), would be effective in decreasing the weight of the rotor and manufacturing costs.

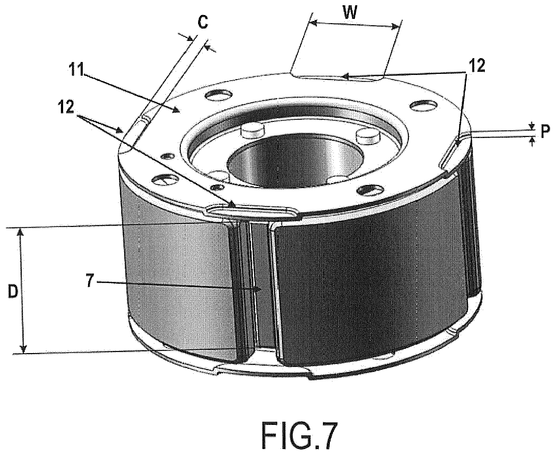

In yet another embodiment, the rotor (2) has only one stopper (7) between each end of the magnets (1), the length of which (D - illustrated in Figure 7) is not equal to the total of its surface in the axial direction, but at least of 1/3 to 2/3 of the latter, in order to still allow a symmetrical assembly of the magnets (1).

In Figure 6, it can be seen an example of a rotor with axial misalignment of one of the magnets (10). This problem, as already mentioned, can generate performance and vibration problems. In Figure 7, it is illustrated an example of rotor of the preferred embodiment of the present invention, with at least one cap (11) comprising recesses (12). In the preferred embodiment, it is necessary two caps (11) in the rotor (2) and each recess (12) is positioned over the spaces between the magnets (1), so as to avoid that at least two magnets (1) are displaced axially. The recess (12) acts by creating a physical reference to facilitate the assembly of the magnets (1), preventing them from being mounted with axial misalignment. The radial length (C) of the recesses (12) should be sufficient (generally between 1/3 and 1/1 of the thickness of the magnet (1) to keep the magnets (1) properly adjusted in their correct place and their width (W) must be at least a size larger than the space between the magnets (1). The width (W) may range from 11/10 of the space between the magnets (1) to the entire perimeter of the cap (11). The depth (P) of the recess (12) must be sufficient to assist in the proper assembly of the magnets (1) and to keep them perfectly assembled and aligned with each other. The depth (P) of the recess (12) must be sufficient so that it allows the assembly of the magnets (1) to be guided by it, but care must be taken that it does not touch the side surfaces of the magnets (1). In other words, the recess (12) of the cap (11) should be able to allow a gap between its inner surface and the side surface of the magnets (1) facing it, being that such gap should be adequate to allow the correct coupling of the magnets (1). In fact, the recess (12) itself is produced according to the width of the magnet (1) to be used in the rotor. Just to exemplify, such gap is generally from 1 mm to 5mm, depending on the size of the rotor to be used. Therefore, during the assembly, the recess (12) may even be used as a stopper for the axial positioning of the magnets (1), without causing any detriment to the performance or manufacture of the rotors. Also, in figure 7 it can be seen the stopper (7) with a length (D) in the axial direction of the same size as the surface of the rotor (2).

The caps may be made of metal material or of polymeric material.

Having described examples of preferred embodiments, it is to be understood that the scope of the present invention encompasses other possible variations, being limited only by the content of the appended claims, including possible equivalents thereto.

## Claims

1. A rotor (2) for brushless type motors with surface magnets (1), **characterized by** the fact that it has at least one stopper (7) disposed radially in its steel core and adjacently located between one of the axial ends of at least each two of four magnet segments equidistant from each other in said rotor (2).

2. The rotor (2), according to claim 1, **characterized by** the fact that at least one stopper (7) is located between all the axial ends of all the magnet segments (1) equidistant from each other in said rotor (2).

3. The rotor (2), according to any of claims 1-2, **characterized by** the fact that the rotor has caps (11) on the lower and upper side, being that the caps have at least one axial recess (12) projecting towards the region of the radial ends of the magnets (1).

4. The rotor (2), according to claim 3, **characterized by** the fact that the number of axial recesses must be equal to the number of magnet segments of the rotor.

5. The rotor (2), according to any of claims 1-4, **characterized by** the fact that the stopper size (L-width) must be between 1/2 and 2/3 of the average space between all magnets disposed in the rotor.

6. The rotor (2), according to any of claims 1-5, **characterized by** the fact that the stopper (7) has a height (H) of less than 50% of the thickness of the magnet and has a length (D) extending throughout the axial length of the surface of the rotor (2).

7. The rotor (2), according to any of claims 1-6, **characterized by** the fact that the stopper extends in part of the axial length (D) of the surface of the rotor (2).

8. The rotor (2), according to any of claims 1-7, **characterized by** the fact that it comprises at least two stopper (7) elements, of minimum axial length (D) and of size (L-width) between 1/2 and 2/3 of the average space between each of the magnets (1), each preferably disposed near the ends of the rotor.

9. The rotor (2), according to any of claims 1-8, **characterized by** the fact that it comprises only one stopper (7) between each end of the magnets (1), whose length (D) is less than the total of its surface in the axial direction.

10. The rotor (2), according to claim 9, **characterized by** the fact that the stopper (7) between each end of the magnets (1) has a length (D) of 1/3 to 2/3 of the total of its surface in the axial direction.

11. The rotor (2), according to claim 3, **characterized by** the fact that the axial recess (12) has a radial length (C) sufficient to keep the magnets (1) properly fitted in the correct place and its width (W) must be at least a size slightly larger than the space between the magnets (1).

12. The rotor (2), according to claim 11, **characterized by** the fact that the axial recess (12) has a radial length (C) between 1/3 and 1/1 of the thickness of the magnet (1).

13. The rotor (2), according to claim 11, **characterized by** the fact that the axial recess (12) has the width (W) size ranging from 11/10 of the space between the magnets (1) to the entire perimeter of the cap (11) and by the fact that the axial recess (12) preferably has a depth (P) capable of allowing a gap between its inner surface and the side surface of the magnets (1) facing it.

14. The rotor (2), according to claim 13, **characterized by** the fact that the gap between its inner surface and the side surface of the magnets (1) facing it, is from 1 mm to 5 mm, depending on the size of the rotor to be used and by the fact that the radial stoppers (7) of the rotor (2) are optionally formed during the stamping of the electric steel lamination.

15. The rotor (2), according to any of claims 1-14, **characterized by** the fact that the stoppers (7) of the rotor are formed by additional components fixed to the rotor during manufacture, and by the fact that the caps (11) are preferably made of metallic material or polymeric material.
